# EUROPEAN PATENT APPLICATION

(11) **EP 4 350 604 A1**
(43) Date of publication of application: **10.04.2024**
(21) Application number: 22199944.4
(22) Date of filing: 06.10.2022
(51) Int. Cl.: G06T 3/40

(54) **MEASUREMENT APPARATUS, MEASUREMENT METHOD AND APPARATUS FOR GENERATING A DATA PROCESSING MODEL**

(71) Applicant: Siemens Healthcare GmbH, 91052 Erlangen (DE)
(72) Inventor: Dethlefsen, Mark, 91058 Erlangen (DE); Engel, Thomas, 73432 Aalen (DE)
(74) Representative: Siemens Healthineers Patent Attorneys

(57) **Abstract**

The invention relates to a measurement system for processing sensor data, wherein the sensor data are acquired by a sensor having imperfections. The sensor data from the sensor are processed according to a modulation transfer function to compensate imperfections of the sensor. Subsequently, a device independent transfer model is applied to the compensated measurement data. The invention further relates to a generation of such a device independent transfer model.

## Description

The present invention relates to a measurement apparatus and method. The present invention further relates to an apparatus and method for generating a data processing model which can be used in a measurement apparatus.

Even though the present invention is hereinafter described in connection with an image processing system, the present invention is not limited to the field of image processing. Moreover, the general concept of the present invention may be also applied to any kind of appropriate data.

Fourier Ptychographic Microscopy (FPM) is a relative new microscopy technique. In this approach, a number of low-resolution images are acquired under different illumination angles and combined to a high-resolution image in an iterative calculation. This approach is typically based on the Gerchberg-Saxton algorithm. Further, some research has been done on replacing the iterative algorithm with a neural network based reconstruction. The neural network has to be trained using high resolution images as ground truth data. However, the low-resolution input data as well as the high-resolution ground truth data are affected by image artefacts. These image artefacts could be replicated in the neural network.

To minimize the effect of system-to-system variations, training data may be acquired on multiple instruments for training the neural network. Alternatively, the neural network may be trained individually on every system. Hence, both alternatives require a huge amount of work for obtaining an appropriate data processing model in order to transfer the low-resolution input data to high resolution output data.

Thus, there is a need for an improved approach of data processing which can deal with device-dependent imperfections of measurement systems.

The present invention provides an apparatus and a method for generating a data processing model, a measurement apparatus and a measurement method with the features of the independent claims. Further advantageous embodiments are subject matter of the dependent claims.

According to a first aspect, an apparatus for generating a data processing model is provided. The apparatus comprises a compensation unit and a model generation unit. The compensation unit is configured to receive measurement data from a first sensor. The compensation unit is further configured to process the received measurement data based on a sensor specific modulation transfer function. In this way, compensated data are obtained. The modulation transfer function relates to sensor specific imperfections of the first sensor which provides the measurement data. The model generation unit is configured to generate a sensor independent transfer model. The sensor independent transfer model is used for calculating high-resolution output data. The high-resolution output data are computed based on multiple sets of compensated measurement data, wherein the compensated measurement data have a lower resolution than the high-resolution output data. The model generation unit is further configured to generate the sensor independent transfer model based on the multiple data sets of the compensated measurement data and the related target data.

According to a further aspect, a measurement apparatus is provided. The measurement apparatus comprises an input unit and a processing unit. The input unit is configured to receive measurement data from a sensor. The input unit is further configured to process the received measurement data. In particular, the received measurement data are processed based on a sensor specific modulation transfer function. In this way, compensated measurement data are obtained. The modulation transfer function relates to sensor specific imperfections of the sensor which provides the measurement data. The processing unit is configured to compute high resolution output data. The high-resolution output data are computed based on multiple datasets of compensated measurement data from the sensor. The high-resolution output data have a resolution which is higher than a resolution of the measurement data which are received from the sensor.

According to a further aspect, a method for generating a data processing model is provided. The method comprises a step of receiving measurement data from a sensor. The method further comprises a step of processing the received measurement data. In particular, the received measurement data are processed based on a modulation transfer function. In this way, compensated data are obtained. The modulation transfer function relates to sensor specific imperfections of the sensor which provides the measurement data. Further, the method comprises a step of generating a sensor independent transfer model. The generation of the sensor independent transfer model is based on multiple data sets of compensated measurement data and related target data.

According to still another aspect, a measurement method is provided. The measurement method comprises a step of receiving measurement data from a sensor. The method further comprises a step of processing the received measurement data based on a sensor specific modulation transfer function. In this way, compensated measurement data are obtained. The modulation transfer function relates to sensor specific imperfections of the sensor which provides the measurement data. Further, the method comprises a step of computing high resolution output data. The high-resolution output data are computed based on multiple datasets of compensated measurement data from the sensor. The high-resolution output data have a resolution which is higher than a resolution of the measurement data which are received from the sensor.

The present invention is based on the finding that each sensor for measuring a physical parameter is affected by individual, device dependent imperfections. For example, each optical sensor system such as a camera or the like may have a lens or lens system with individual imperfections. Thus, a measurement result which is reconstructed based on sensor data provided by such a sensor with device dependent imperfections may be slightly different for each sensor.

In order to deal with such device dependent imperfections, a reconstruction model for processing the sensor data may be adapted individually for each sensor according to the respective sensor imperfections. However, this requires a very complex configuration for each sensor system.

The present invention therefore takes into account this finding and aims to provide a measurement approach which can easily deal with device dependent imperfections of a sensor. For this purpose, it is an idea of the present invention to divide the reconstruction process from imperfect sensor data to the related reconstruction result into to two successive stages. In a first stage, the sensor data from a sensor are processed in order to compensate device dependent imperfections. For this purpose, a modulation transfer function (MTF) of the respective sensor may be determined. In case of an optical system, such an MTF may compensate, for example, imperfections of a lens or lens system. However, it is understood, that any other kind of imperfections may be also compensated based on the MTF.

After compensating the device dependent imperfections of the sensor, a device independent reconstruction model can be generated. This device independent reconstruction model can be used to generate output data with desired properties, for example a desired high resolution of an image, based on appropriate input data.

For example, a simple and cheap image sensor may be used for capturing multiple datasets of low-resolution image data. After processing the image data provided by the low-resolution image sensor according to the MTF, multiple compensated datasets can be used in order to generate a high-resolution image based on the device independent transfer model. Since the imperfections of the related sensor are compensated in advance, a same device independent transfer model can be used for multiple systems with different sensors of a same type. In this case, it is only necessary to adapt the modulation transfer function individually for each sensor. Since it is not necessary to generate an individual transfer model for processing the low-resolution input data to high resolution output data, time and costs can be saved.

The sensor specific modulation transfer function can be determined for each sensor individually. For example, the MTF can be determined in advance, e.g. when manufacturing the respective sensor. However, it may be also possible to determine the MTF after installing the respective sensor in the related measurement apparatus. The MTF may be provided in any appropriate form. For example, the MTF may be provided by providing a predetermined set of parameters specifying the particular properties of the respective sensor. It may be also possible to provide a formula or the like for characterizing the modulation transfer function of the sensor. The data of the MFT may be provided by storing the respective data in a memory of the sensor or the measurement apparatus. In this way, each measurement apparatus can be easily adapted to a related sensor. In case of a replacement of a sensor by another sensor of a same type, the related data for characterizing the MTF can be easily replaced by new data of a newly installed sensor. Thus, it is not necessary to perform any further modifications, in particular modifications to the complex model for generating the high-resolution output data. Moreover, a same model for reconstructing the high-resolution output data based on the compensated low resolution input data can be used for multiple measurement apparatuses.

Thus, the present invention proposes to split the generation of the high-resolution output data into two successive tasks, namely a first task for dealing with the device dependent imperfections of the related sensor and a successive task of processing the compensated sensor data for reconstructing desired output data. In this way, only the first task of dealing with the device dependent sensor imperfections has to be adapted to the respective sensors, while the successive task of reconstructing the output data based on compensated sensor data can be performed for multiple measurement apparatuses based on a same reconstruction model.

According to an embodiment, the model generation unit is configured to generate the sensor independent transfer model based on a machine learning algorithm. For this purpose, the machine learning algorithm may be provided with multiple datasets of compensated measurement data and the related target data. Further, the machine learning algorithm may be also provided with a related target data, i.e. a desired output corresponding to the provided measurement data. For example, the related target data may be acquired by an additional sensor. This additional sensor may measure a same scenario as the sensors for providing the measurement data. Since the further sensor for acquiring the related target data may be also affected by imperfections, the target data may be also compensated based on a related modulation transfer function for the sensor which acquires the target data. Alternatively, it may be also possible to use a very high-quality sensor for acquiring the target data wherein such a high-quality sensor has only very small imperfections which can be neglected. By using a machine learning algorithm approach for determining the sensor independent transfer model, a reliable automated generation of the respective model can be achieved.

In a possible embodiment, the sensor independent transfer model comprises a neural network. In this case, the model generation unit is configured to train the neural network based on the multiple datasets of compensated measurement data and the related target data. Since the raw data for training the neural network have been processed in advance by removing sensor specific imperfections, the training process for the neural network can be significantly simplified.

In a possible embodiment, the apparatus for generating the data processing model comprises a receiving unit. This receiving unit is configured to receive the related target data from a further sensor. The further sensor for providing this data is configured to provide data having a resolution higher than a resolution of the first sensor which provides the measurement data. Accordingly, the sensor independent transfer model can be generated based on realistic data for both, the input data from the sensor and the corresponding data provided by the further sensor.

In a possible embodiment, the receiving unit is configured to compensate the data received from the further sensor. In particular, the further sensor data may be compensated based on a further modulation transfer function. This further modulation transfer function may relate to the further sensor providing the sensor data for the respective target data. Further, the receiving unit may be configured to provide the compensated data for the further sensor as target data for generating the sensor independent transfer model. Accordingly, both, the raw data provided by the sensor as well as the target data are processed in order to remove or at least minimize sensor specific imperfections.

In a possible embodiment, the measurement data are image data provided by a first image sensor. Accordingly, the reference data are also image data, wherein the reference image data have a resolution which is higher than the resolution of the image data provided by the first image sensor. Accordingly, the device independent transfer model provides a model wherein input datasets of low-resolution images are processed in order to obtain a high-resolution image.

In a possible embodiment, the model generation unit is configured to generate a sensor independent transfer function for a Fourier Ptychography Microscope.

In a possible embodiment of the measurement apparatus, the measurement data are image data provided by a first image sensor having a resolution lower than a resolution of the high-resolution output data. Accordingly, the measurement apparatus can improve the image resolution/quality by using low resolution image data from a low-cost image sensor in order to process the data for providing high-resolution image data.

In a possible embodiment, the measurement apparatus comprises an analysing unit. The analysing unit is configured to analyse the high-resolution output data and to identify predetermined properties in the analysed high resolution output data. For example, an automated detection of particular properties in the output data can be performed. In this way, an automated diagnosis is performed.

In a possible embodiment, the measurement apparatus comprises at least one sensor. The at least one sensor is configured to provide measurement data. Accordingly, the input unit of the measurement apparatus is configured to use a separate sensor specific modulation transfer functions for each sensor.

According to a further aspect, a Fourier Ptychography Microscope is provided comprising the above-described measurement apparatus. Further, the Fourier Ptychography Microscope may comprise an apparatus for generating a data processing model according to an aspect of the present invention.

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

In the drawings:
- Fig. 1:: shows a schematic block diagram of a measurement apparatus according to an embodiment;
- Fig. 2:: shows a schematic block diagram of an apparatus for generating a data processing model according to an embodiment;
- Fig. 3:: shows a schematic block diagram of a Fourier Ptychography Microscope with a measurement apparatus according to an embodiment;
- Fig. 4:: shows a flow diagram illustrating a measurement method according to an embodiment; and
- Fig. 5:: shows a diagram illustrating a method for generating a data processing model according to an embodiment.

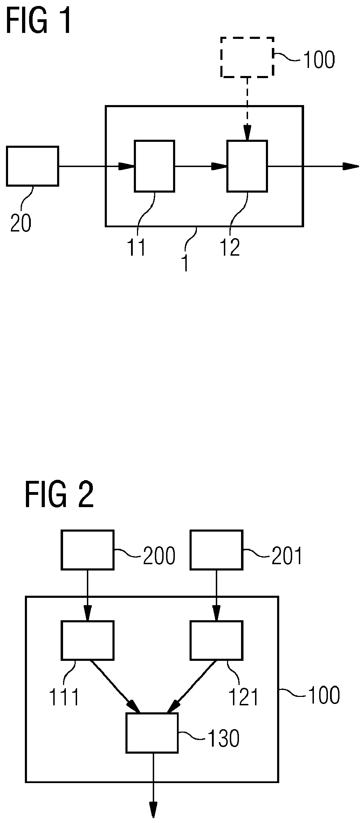

Figure 1 shows a schematic block diagram of a measurement apparatus 1 according to an embodiment. Even though the present invention is described in the following mainly in connection with a measurement configuration for acquiring image data, the present invention may be also applied to any other kind of data.

The measurement apparatus 1 according to figure 1 comprises an input unit 11 and a processing unit 12. Measurement apparatus 1 may be provided with measurement data such as sensor data acquired by one or more sensors 20. For example, sensor 20 may be an optical sensor for acquiring image data. For this purpose, sensor 20 may comprise any appropriate components such as an optical system with lenses and an imaging sensor for acquiring the image data. Accordingly, the image data may be provided with a first resolution. Measurement apparatus 1 may receive the measurement data from sensor 20. For example, the measurement data may be received by input unit 11 of measurement apparatus 1. For this purpose, input unit 11 may comprise appropriate interfaces for receiving the data from sensor 20. Since almost each real sensor for sensing a physical parameter may be affected by imperfections, the sensor data provided by sensor 20 may be also affected by device specific imperfections. Especially, each sensor 20 may have slightly different imperfections. The relationship between the real properties of a parameter sensed by sensor 20 and the corresponding imperfect measurement values can be described by a so-called modulation transfer function (MTF). For example, such an MTF may describe a relationship between a real image and the related image data provided by an image sensor capturing the respective scene. Such imperfections may be caused, for example due to imperfections of lenses in the optical system or the like. These imperfections can be identified and a modulation transfer function (MTF) can be determined which describes the relationship between the perfect, real properties sensed by sensor 20 and the measurement data provided by the sensor which are affected by the imperfections of the sensor. Thus, it is possible to consider the imperfections of sensor 20 and to compensate these imperfections according to the MTF.

For example, the MTF of an imaging system may consider disturbances due to imperfections of lenses or the like. Such an MTF can be determined, for example, by capturing reference images and comparing the result of the image data reconstructed based on the sensor data with the well-known reference image.

As can be seen in figure 1, the MTF of the sensor system 20 may be provided to measuring apparatus 1. Accordingly, an input unit 11 of the measurement apparatus 1 may process the sensor data received from sensor 20 in order to compensate the sensor imperfections based on the MTF of the related sensor 20. In this way it is possible to remove or at least minimize device dependent variations of the measurement data provided by sensor 20. Thus, input unit 11 can provide compensated measurement data, wherein device dependent properties of sensor 20 are removed or minimized. Consequently, the output of input unit 11 may be almost the same regardless of the sensor 20. In other words, when compensating measurement data provided by a sensor 20 based on the related MTF of the respective sensor, input unit 11 may provide an almost similar result for different sensors 20 of a same type. Since imperfections of sensor 20 can be compensated based on the MTF, the constraints for the quality of the respective sensor 20 can be reduced, and it is possible to use even low-cost sensors 20, wherein the individual sensors 20 of a same type may have rather high tolerances.

Input unit 11 may provide the compensated measurement data to processing unit 12. Processing unit 12 may process the compensated measurement data from input unit 11 in order to generate a high-quality reconstruction result. For example, processing unit 12 may use multiple datasets of low-resolution image data and process these datasets in order to obtain a high-resolution output image. For example, multiple datasets can be acquired by a low-resolution image sensor, wherein some properties such as illumination or the like may be slightly changed for each dataset. The compensated data of all these datasets may be provided to an image reconstruction model of processing unit 12. After processing these datasets according to the respective model, processing unit 12 may output a high-resolution image.

Since the data provided to processing unit 12 are compensated measurement data, wherein the device dependent properties of the respective sensor 20 are eliminated by input unit 11, the reconstruction model used by processing unit 12 is independent of the individual device dependent inaccuracies of the respective sensor 20. Thus, a same reconstruction model can be used in all measurement apparatuses 1 which are provided with measurement data from a sensor 20 of a same type, even if the individual sensors 20 have different inaccuracies.

Even if sensor 20 has to be replaced by another sensor 20 in case of a failure or the like, it is sufficient to provide measurement apparatus 1 with the related MTF of the newly installed sensor 20. Accordingly, input unit 11 can compensate the inaccuracies of the newly installed sensor 20 in order to provide device independent compensated measurement data to processing unit 12.

The result of the reconstruction performed by processing unit 12 can be further processed in any appropriate manner. For example, a reconstructed image may be displayed on a display or further provided to another unit of measurement apparatus 1 or an external device for further processing.

Figure 2 shows a block diagram of an apparatus 100 for generating a data processing model, in particular a data processing model which can be used by processing unit 12 of the above-described measurement apparatus 1.

Apparatus 100 for generating the data processing model may comprise a compensation unit 111 and a model generation unit 130. Compensation unit 111 may receive sensor data from a sensor 200. In particular, sensor 200 may be a sensor of a same type as used for providing measurement data to the above-described measurement apparatus 1. Accordingly, the measurement data provided to compensation unit 111 may be also affected by the imperfections of the related sensor 200. Thus, compensation unit 111 may be provided with the MTF of the respective sensor 200. Based on this MTF, compensation unit 111 can process the measurement data from sensor 200 based on the related MTF and provide compensated measurement data. The compensated measurement data can be provided to model generation unit 130. Further, model generation unit 130 is also provided with reference data. The reference data relate to a desired output, which is expected when providing a model with the compensated measurement data. For example, the reference data may be acquired by a further sensor 201. This sensor 201 may be, for example, a high quality and/or high-resolution sensor which may acquire a same parameter or set of parameters as measured by sensor 200. Since even a high-quality sensor 201 may be also affected by some imperfections, it may be optionally possible to compensate the data from the high-quality sensor 201 based on a related MTF which is associated with this high-quality sensor 201. For this purpose, a further compensation unit 121 may be provided. In this way both, the data from low resolution sensor 200 as well as the data from high resolution sensor 201 are compensated based on the respective MTFs. Accordingly, model generation unit 130 is provided with data wherein device related imperfections are eliminated or at least minimized. In this way, model generation unit 130 can generate a model for computing high resolution output according to the properties of the reference data based on low resolution input according to the data of the measurement data provided by sensor 200.

Since the model is generated based on measurement data wherein the sensor related imperfections properties are compensated according to the related MTF, the determined reconstruction model can be used in each measurement apparatus 1 which is provided by measurement data of a sensor 20 of a same type as sensor 200 used for generating the reconstruction model. A sensor of same type may be, for example, another sensor having identical or at least similar properties. For example, such a sensor may be another sensor with same or only slightly different hardware components. Especially, such a sensor of the same type may provide nominally same imaging properties with respect to power metres like a length, bandwidth, sensing image space (which may be a combination of pixel size and zooming factor). Thus, even imaging sensors of different manufacturers, different hardware configuration or other variations may be used, as long as the input data removed from the imperfections of the respective sensor are nominally the same.

The generation of the reconstruction model can be performed by any appropriate manner. In particular, it may be possible to generate the reconstruction model based on a machine learning approach. For this purpose, multiple sets of compensated measurement data from sensor 200 and related target data, for example a related high-resolution result, are provided to a machine learning algorithm. The machine learning algorithm performs a processing of the provided data in order to obtain the reconstruction model which outputs the related target data when provided with the corresponding compensated measurement datasets.

In a particular embodiment, the reconstruction model may be based on a neural network. In such a case, model generating unit 130 may train the respective neural network based on the above-described compensated measurement data from sensor 200 and the related target data. Since the generation of the reconstruction model, in particular the training of the neural network, is based on compensated measurement data wherein the individual imperfections of the sensors 200 are compensated according to the respective MTF, the training of the neural network can be simplified and accelerated.

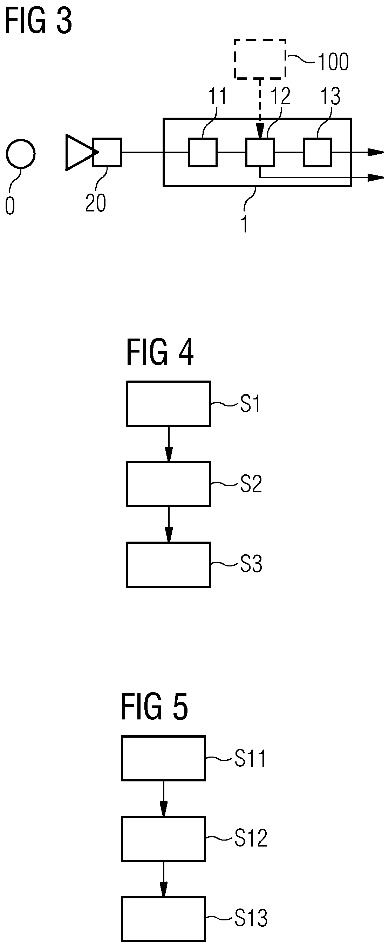

Figure 3 shows a block diagram of a measurement apparatus 1 according to a further embodiment. In particular, the configuration as described in connection with figure 3 may be used, for example, for a Fourier Ptychography Microscope.

A sensor 20 may acquire measurement data. For example, sensor 20 may be an image sensor which acquires image data of an object O. Especially, multiple sets of image data may be acquired, wherein one or more acquisition parameters may be slightly changed. For example, an illumination of object O may be slightly changed during capturing multiple sets of image data.

The captured image data from sensor 20 are provided to measurement apparatus 1. As already described above, input unit 11 may process the provided measurement data from sensor 20 in order to eliminate or at least minimize device related imperfections or the like. For this purpose, the compensation of the provided measurement data from sensor 20 are compensated according to the MTF of sensor 20.

Subsequently, processing unit 12 may use multiple datasets of compensated measurement data and apply the compensated measurement data to a device independent transfer model. After applying the transfer model to the compensated measurement data, processing unit 12 can output resulting output data. In particular, the output data, for example the output image data, can have a resolution which is higher than the resolution for another property of the compensated measurement data which are provided as input data to the transfer model.

The transfer model which is used by processing unit 12 can be provided by apparatus 100 for generating a transfer model as already described above. Since the transfer model is independent of the imperfections of the sensor 20, it is not necessary to amend or replace the transfer model even when sensor 20 is replaced by another sensor 20, especially another sensor of a same type.

Furthermore, it may be possible to determine the MTF after completely installing the measurement apparatus 1 at a desired location and/or a specific environment. In such a case, it is possible to consider all related external impact for measuring by sensor 20. Alternatively, the MTF may be already determined, for example, after manufacturing the respective sensor 20.

The above-described measurement apparatus may be used, for example, for a Fourier Ptychography Microscope (FPM). Such an FPM may capture multiple low-resolution images by means of an appropriate low resolution imaging sensor. For example, multiple images of a same object may be captured wherein one or more parameters such as illumination or the like may be slightly modified for each captured image. The captured image data of the multiple images may be compensated according to the related MTF of the imaging sensor. Subsequently, the compensated low-resolution images are provided to processing unit 12. Processing unit 12 may apply the device independent transfer model in order to generate a high-resolution image.

The output of the FPM or any other application using the above-described approach of compensating datasets by a MTF and subsequently applying a sensor independent transfer model may be also applied to any other appropriate kind of data. For example, the approach may be also applied to radar data or the like.

The output of processing unit 12 may be provided to a user, forwarded to a further apparatus, stored in a memory or processed by any other appropriate manner. For example, the output of processing unit 12 may be provided to an analysing unit 13. Analysing unit 13 may analyse the output of processing unit 12 by any appropriate manner. For example, analysing unit 13 may identify predetermined properties in the output data of processing unit 12. For example, a medical sample such as a blood sample or the like may be sensed by the above-described FPM in order to obtain high quality image data. The image data generated by processing unit 12 may be provided to an analysing unit 13. Analysing unit 13 may identify predetermined properties. Accordingly, identified properties may be highlighted in the image data. Additionally or alternatively, a diagnosis based on the identified properties may be provided to a user. It is understood, that any other scheme for performing an analysis of the output from processing unit 12 may be also possible.

Figure 4 shows a diagram illustrating a measurement method according to an embodiment. The measurement method may perform any step which could be necessary in connection with the above-described measurement apparatus. Accordingly, the above-described measurement apparatus 1 may comprise appropriate elements or units for performing the steps of the measurement method as described in the following.

In a step S1, measurement data from a sensor 20 are received. In step S2, the received measurement data are processed based on a sensor specific MTF. Accordingly, compensated measurement data are obtained. As already described above, the MTF relates to sensor specific imperfections of the sensor 20 providing measurement data. In step S3, high resolution output data are computed. The high-resolution output data are computed based on multiple datasets of compensated measurement data from the sensor 20. The high-resolution output data have a resolution which is higher than the resolution of the measurement data received from the sensor 20.

Figure 5 shows a diagram illustrating a method for generating a data processing model according to an embodiment. The method may comprise any kind of steps for performing an operation as already described above in connection with the apparatus for generating the data processing model. In the same way, the above-described apparatus for generating a data processing model may comprise any kind of element or unit in order to perform the method steps as described in the following.

In a step S11, measurement data from a sensor are received. In step S12, the received measurement data are processed. In particular, the measurement data are processed based on an MTF. In this way, compensated data are obtained. As already described above, the MTF relates to sensor specific imperfections of the sensor 200 'providing the measurement data. In a step S13, a sensor independent transfer model is generated. The sensor independent transfer model is generated based on multiple datasets of compensated measurement data and related target data.

Summarizing, the present invention relates to a measurement system for processing sensor data, wherein the sensor data are acquired by a sensor having imperfections. The sensor data from the sensor are processed according to a modulation transfer function to compensate imperfections of the sensor. Subsequently, a device independent transfer model is applied to the compensated measurement data. The invention further relates to a generation of such a device independent transfer model.

### List of Reference Signs

- 1: measurement apparatus

- 11: input unit
- 12: processing unit
- 13: analysing unit

- 20: sensor

- 100: apparatus for generating a data processing model
- 111: compensation unit
- 121: further compensation unit
- 130: model generation unit

- S1..S3: method steps
- S11..S13: method steps

## Claims

1. Apparatus (100) for generating a data processing model, the apparatus (100) comprising:
a compensating unit (111) configured to receive measurement data from a first sensor (200), and to process the received measurement data based on a sensor specific modulation transfer function to obtain compensated data, wherein the modulation transfer function relates to sensor specific imperfections of the first sensor (200) providing the measurement data;
a model generation unit (130) configured to generate a sensor independent transfer model, the transfer model is used for calculating high-resolution output data based on multiple sets of compensated measurement data having a lower resolution than the high-resolution output data,
wherein the model generation unit (111) is configured to generate the sensor independent transfer model based on the multiple data sets of compensate measurement data and related target data.

2. Apparatus (100) according to claim 1, wherein the model generation unit (130) configured to generate the sensor independent transfer model based on a machine learning algorithm based on the multiple data sets of compensate measurement data and the related target data.

3. Apparatus (100) according to claim 1 or 2, wherein the sensor independent transfer model comprises a neural network; and
the model generation unit (130) configured to train the neural network based on the multiple data sets of compensate measurement data and the related target data.

4. Apparatus (100) according to any of claims 1 to 3, comprising a receiving unit (121) configured to receive the related target data form a further sensor (201), the further sensor (201) is configured to provide data having a resolution higher than a resolution of the first sensor (200) providing the measurement data.

5. Apparatus (100) according to claim 4, wherein the receiving unit (121) is configured to compensate the data received from the further sensor (201) based on a further modulation transfer function relating to the further sensor (201), and to provide the compensated data from the further sensor (201) as target data for generating the sensor independent transfer model.

6. Apparatus (100) according to any of claims 1 to 5, wherein the measurement data are image data provided by a first image sensor, and the reference data are image data having a resolution higher that the resolution of the image data provided by the first image sensor.

7. Apparatus (100) according to any of claims 1 to 6, wherein a model generation unit (130) is configured to generate a sensor independent transfer model for a Fourier Ptychoraphy Microscope.

8. Measurement apparatus (1), comprising:
an input unit (12) configured to receive measurement data from a sensor (20), and to process the received measurement data based on a sensor specific modulation transfer function to obtain compensated measurement data, wherein the modulation transfer function relates to sensor specific imperfections of the sensor (20) providing the measurement data;
a processing unit (12) configured to compute high-resolution output data based on multiple datasets of compensated measurement data from the sensor (20), wherein the high-resolution output data having a resolution which is higher than a resolution of the measurement data received from the sensor.

9. Measurement apparatus (1) according to claim 8, wherein the measurement data are image data provided by a first image sensor having a resolution lower than a resolution of the high-resolution output data.

10. Measurement apparatus (1) according to claim 8 or 9, comprising an analysing unit (13) configured to analyse the high-resolution output data and to identify predetermined properties in the analysed high-resolution output data.

11. Measurement apparatus (1) according to any of claims 8 to 10, comprising at least one sensor (20) configured to provide measurement data, wherein the input unit (11) is configured to use a separate sensor specific modulation transfer function for each sensor (20).

12. Fourier Ptychography Microscope comprising
a measurement apparatus (1) according to any of claims 8 to 11.

13. Fourier Ptychography Microscope according to claim 12, wherein the sensor independent transfer function is provided by an apparatus (100) for generating a data processing model according to any of claims 1 to 7.

14. Method for generating a data processing model
receiving (S11) measurement data from a sensor (200),
processing (S12) the received measurement data based on a modulation transfer function to obtain compensated data, wherein the modulation transfer function relates to sensor specific imperfections of the sensor (200) providing the measurement data;
generating (S13) a sensor independent transfer model based on multiple data sets of compensated measurement data and related target data.

15. Measurement method, comprising the steps of:
receiving (S1) measurement data from a sensor (20),
processing (S2) the received measurement data based on a sensor specific modulation transfer function to obtain compensated measurement data, wherein the modulation transfer function relates to sensor specific imperfections of the sensor (20) providing the measurement data;
computing (S3) high resolution output data based on multiple datasets of compensated measurement data from the sensor (20), wherein the high-resolution output data having a resolution which is higher than a resolution of the measurement data received from the sensor (20).
